# EUROPEAN PATENT APPLICATION

(11) **EP 2 023 535 A1**
(43) Date of publication of application: **11.02.2009**
(21) Application number: 07115354.8
(22) Date of filing: 30.08.2007
(51) Int. Cl.: H04L 12/28, H04L 12/56

(54) **System and method for defining multi-domain wireless device behavior for two or more calls**

(30) Priority: 10.08.2007 US 837273
(71) Applicant: Research In Motion Limited, Waterloo, Ontario N2L 3W8 (CA)
(72) Inventor: Buckley, Adrian, Tracy, CA 95376 (US)
(74) Representative: Rickard, David John

(57) **Abstract**

A multi-domain device 110 is provided that has a memory component 112 provisioned to store a policy 113 for managing a second call on the multi-domain device 110 when a first call is active on the multi-domain device 110. The multi-domain device 110 also includes a processor 114 configured to implement the policy 112.

## Description

Easily transportable devices with wireless telecommunications capabilities, such as mobile telephones, personal digital assistants, handheld computers, and similar devices, will be referred to herein as wireless devices. The term "wireless device" may refer to a device and its associated Universal Integrated Circuit Card (UICC) that includes a Subscriber Identity Module (SIM) application, a Universal Subscriber Identity Module (USIM) application, or a Removable User Identity Module (R-UIM) application or may refer to the device itself without such a card. A wireless device might communicate with a second wireless device, some other element in a telecommunications network, an automated computing device such as a server computer, or some other device, any of which can be referred to as a correspondent node. A communications connection between a wireless device and a correspondent node might promote a voice call, a file transfer, or some other type of data exchange, any of which can be referred to as a call or a session.

Some wireless devices communicate in a circuit switched mode, wherein a dedicated communication path exists between two devices. For the duration of a call or session, all data exchanged between the two devices travels along the single path. Some wireless devices have the capability to communicate in a packet switched mode, wherein a data stream representing a portion of a call or session is divided into packets that are given unique identifiers. The packets might then be transmitted from a source to a destination along different paths and might arrive at the destination at different times. Upon reaching the destination, the packets are reassembled into their original sequence based on the identifiers.

Communications that take place via circuit switching can be said to occur in the circuit switched domain and communications that take place via packet switching can be said to occur in the packet switched domain. A wireless device that is capable of communicating in both the circuit switched domain and the packet switched domain can be referred to as a multi-domain device or a multi-mode device. As a user of a multi-mode device travels, the device might be required to move from a circuit switched domain to a packet switched domain or from a packet switched domain to a circuit switched domain. When a requirement for a transition from one domain to another occurs as a result of a change in the underlying wireless communication networks or for other reasons, a handover may need to take place to transfer a call from one type of network to another.

Within each domain, several different types of networks, protocols, or technologies can be used. In some cases, the same network, protocol, or technology can be used in both domains. The wireless communication networks may be based on Code Division Multiple Access (CDMA), Time Division Multiple Access (TDMA), Frequency Division Multiple Access (FDMA), Orthogonal Frequency Division Multiplexing (OFDM), or some other multiple access scheme. A CDMA-based network may implement one or more standards such as 3GPP2 IS-2000 (commonly referred to as CDMA 1x), 3GPP2 IS-856 (commonly referred to as CDMA 1xEV-DO), or 3GPP UMTS (Universal Mobile Telecommunications System). A TDMA-based network may implement one or more standards such as 3GPP Global System for Mobile Communications (GSM) or 3GPP General Packet Radio Service (GPRS).

GSM is an example of a wireless network standard that uses only the circuit switching mode. Examples of wireless network standards that use only packet switching include GPRS, CDMA 1x EV-DO, Worldwide Interoperability for Microwave Access (WiMax), and Wireless Local Area Network (WLAN), which might comply with Institute of Electrical and Electronics Engineers (IEEE) standards such as 802.16, 802.16e, 802.11a, 802.11b, 802.11g, 802.11n, and similar standards. Examples of wireless network standards that may use both circuit switching and packet switching modes include CDMA 1x and UMTS. An example of an application-layer protocol that can be used in a packet switching wireless network is the Session Initiation Protocol (SIP). SIP has been standardized and governed primarily by the Internet Engineering Task Force (IETF). The IP (Internet Protocol) Multimedia Subsystem (IMS) is a packet switched technology that allows multimedia content to be transmitted between wireless devices.

### GENERAL

In an embodiment, a method may be provided for managing a second call on a multi-domain device when a first call is active on the multi-domain device. The method may comprise following a policy that specifies that the second call is to be connected in one of a first domain in which the first call is active, or a second domain in which the first call is not active.

In another embodiment, a multi-domain device may be provided that has a memory component provisioned to store a policy for managing a second call on the multi-domain device when a first call is active on the multi-domain device. The multi-domain device also includes a processor configured to implement the policy.

In another embodiment, a telecommunications network component may be provided. The telecommunications network component may comprise a memory component provisioned to store a policy for managing a second call on a multi-domain device when a first call is active on the multi-domain device, and a processor configured to implement the policy.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a block diagram of a telecommunications system according to an embodiment of the disclosure.

Figure 2 is a diagram of a method for managing a second call on a multi-domain device when a first call is active on the multi-domain device according to an embodiment of the disclosure.

Figure 3 is a diagram of a wireless communications system including a wireless device operable for some of the various embodiments of the disclosure.

Figure 4 is a block diagram of a wireless device operable for some of the various embodiments of the disclosure.

Figure 5 is a diagram of a software environment that may be implemented on a wireless device operable for some of the various embodiments of the disclosure.

### DESCRIPTION OF PREFERRED EMBODIMENTS

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Some networks in the packet switched domain can maintain multiple concurrent sessions with a correspondent node. For example, in one of these networks, a user could use a wireless device to carry on a voice over Internet Protocol (VoIP) conversation with a correspondent node in a first session while concurrently sending a data file to the same correspondent node in a second session. In the circuit switched domain, on the other hand, only one session can be maintained between a wireless device and a correspondent node at any one time. However, in the circuit switched domain, the user could be engaged in a first call while a second call in the same session could be on hold. Alternatively, when the user is engaged in a first call in the circuit switched domain, a second call placed to the wireless device might receive a busy signal, might be sent to voice mail, or might be handled in some other manner.

As used herein, the terms "active", "active call", "active session", and the like will refer to a session that is currently connected. In the packet switched domain, multiple sessions might be active at any one time. In the circuit switched domain, a call in which information can currently be exchanged on a wireless device and a call that is on hold on the same device would both be considered active, for purposes of this disclosure, even though only a single session is in effect. An incoming or outgoing call that is in the process of being placed but that has not yet been connected would not be considered active. A domain in which a call is active on a device can be referred to as an active domain for that device and a domain in which a call is not active on a device can be referred to as an inactive domain for that device.

When a call is active on a multi-domain device, a second call, either originated by or terminated at the device, could be handled in several different ways. For example, a call might be active on the device in the packet switched domain when the user of the device attempts to initiate a second call. The second call might be originated in the packet switched domain or in the circuit switched domain. Alternatively, a call might be active in the packet switched domain when a second call is placed to the device. The second call might terminate in the packet switched domain or in the circuit switched domain. In another example, a call might be active on the device in the circuit switched domain when the user of the device attempts to initiate a second call. The second call might be originated in the packet switched domain or the first call might be placed on hold and the second call might be originated in the circuit switched domain. Alternatively, a call might be active in the circuit switched domain when a second call is placed to the device. The second call might terminate in the packet switched domain or the first call might be placed on hold and the second call might terminate in the circuit switched domain.

In an embodiment, a multi-domain device is provisioned with a policy that specifies how the device should handle a second call when a first call is active. As used herein, the term "handle" can refer to either accepting a mobile terminated call or placing a mobile originated call. A first policy option might specify that the second call should be handled in the active domain. A second policy option might specify that the second call should be handled in the domain that is not currently active. A third policy option might specify that the second call can be handled in either the active domain or the inactive domain.

As mentioned previously, a call may sometimes be handed over from the packet switched domain to the circuit switched domain or from the circuit switched domain to the packet switched domain. In an embodiment, a policy option that is in effect before a handover remains in effect after the handover. That is, under the first policy option, a first call and a second call will be handled in the same domain both before and after a handover between domains. Under the second policy option, a first call and a second call will be handled in different domains both before and after a handover. For example, when the first policy option is in effect and a first call is handed over, a second call will be handled in the domain to which the first call was handed over. When the second policy option is in effect and a first call is handed over, a second call will be handled in the domain from which the first call was handed over.

Several examples may illustrate how calls will be handled in various policy option and domain handover scenarios. In one example, a first call is active in the packet switched domain on a multi-domain device and the first policy option is in effect. That is, a second call will be handled in the active domain. When a second call is originated by or terminated at the device, a second packet switched session will be initiated for the second call. In another example, a first call is active in the packet switched domain and the second policy option is in effect. That is, a second call will be handled in the inactive domain. When a second call is originated by or terminated at the device, a circuit switched session will be initiated for the second call. In still another example, a first call is active in the circuit switched domain and the second policy option is in effect. That is, a second call will be handled in the inactive domain. When a second call is originated by or terminated at the device, a packet switched session will be initiated for the second call.

In yet another example, if a first call is active in the packet switched domain and the first policy option is in effect and the call is handed over to the circuit switched domain, the first policy option would remain in effect. That is, a second call would be handled in the active domain, which in this case would be the circuit switched domain. If a first call is active in the packet switched domain and the second policy option is in effect and the call is handed over to the circuit switched domain, the second policy option would remain in effect. That is, a second call would be handled in the inactive domain, which in this case would be the packet switched domain.

Under the third policy option, no predetermined specification is made regarding the domain in which a second call should be handled. The determination of the domain for the second call might be made based on current network traffic levels, cost considerations, a random domain selection procedure, and/or other factors. In some embodiments, the third policy option is not available and only the first policy option or the second policy option is implemented.

In some embodiments, the provider or operator of the telecommunications network to which a multi-domain device subscribes specifies the policy option that is to be implemented on the device. In an embodiment, the provider or operator provisions the device with one of the three policy options and that option remains in effect until another option is provisioned. In another embodiment, all three options are provisioned to the device and the provider or operator specifies which option is to be in effect at a particular time. In either case, the network and/or the network provider or operator is aware of the policy that is in effect on the multi-domain device and is capable of handling calls to and from the device in accordance with the policy in effect on the device.

In another embodiment, the user of a multi-domain device has the capability to specify which policy option is to be in effect at a particular time. However, the device and the telecommunications network with which the device communicates both typically need to be aware of which policy option is in effect to ensure that the device and the network attempt to communicate in the same domain. Therefore, in this case, the device would typically inform the network of the policy option that the user selected and the network would conform to that policy option.

The provider or operator might provision the policy or policy option on a multi-domain device via a well known transport protocol such as Short Message Service (SMS), Unstructured Supplementary Service Data (USSD), Multimedia Broadcast/Multicast Service (MBMS), cell broadcast, Internet Protocol (IP) over General Packet Radio Service (GPRS), wireless local area network (WLAN), Worldwide Interoperability for Microwave Access (WiMax), or some other protocol. The provisioning mechanism used in the transport protocol might be an Open Mobile Alliance (OMA) Device Management (DM) method, an OTA (over the air) (U)SIM (U (Universal Mobile Telephone Service) Subscriber Identity Module) method, a similar standard transport protocol, or a proprietary mechanism.

The policy might be provisioned with the following OMA DM code. It should be understood that this code is provided only as an example and that one of skill in the art might recognize other syntax or coding that might perform a similar function.

```
       /<X>/MT call policy/
       The MT (mobile terminated) call policy leaf indicates the domain in which a
       wireless device can receive a call.
       Occurrence: One
       Format: bool
       Access Types: Get, Replace
       Values: 0,1
              0 - indicates calls can be received only in the current domain
              1 - indicates calls can be received in either domain
       /<X>/MO call policy/
       The MO (mobile originated) call policy leaf indicates the domain in which a
       wireless device can originate a call.
       Occurrence: One
       Format: bool
       Access Types: Get, Replace
       Values: 0,1
              0 - indicates calls can be originated only in the current domain
              1 - indicates calls can be originated in either domain
       <Node>
              <NodeName>MT call policy</NodeName>
              <DFProperties>
                     <AccessType>
                           <Get/>
                           <Replace/>
                     </AccessType>
                     <DFFormat>
                           <bool/>
                     </DFFormat>
                     <Occurrence>
                           <One/>
                     </Occurrence>
                     <DFTitle>MT call policy</DFTitle>
                     <DFType>
                           <MIME>text/plain</MIME>
                     </DFType>
              </DFProperties>
       </Node>
       <Node>
              <NodeName>MO call policy</NodeName>
              <DFProperties>
                     <AccessType>
                           <Get/>
                           <Replace/>
                     </AccessType>
                     <DFFormat>
                           <bool/>
                     </DFFormat>
                     <Occurrence>
                           <One/>
                     </Occurrence>
                     <DFTitle>MO call policy</DFTitle>
                     <DFType>
                           <MIME>text/plain</MIME>
                     </DFType>
              </DFProperties>
       </Node>
```

In an embodiment, one policy option might be implemented for outgoing calls and another policy option might be implemented for incoming calls. For example, for outgoing calls, the second policy option might be implemented so that when a first call is active on a multi-domain device, a second call originated by the device will be placed in the currently inactive domain. For incoming calls, the first policy option might be implemented so that when a first call is active on a multi-domain device, a second call placed to the device will be handled by the currently active domain. In another example, a policy for outgoing calls might be implemented on the multi-domain device and a policy for incoming calls might be implemented on a component of a telecommunications network with which the multi-domain device can communicate.

In an embodiment, the user of a multi-domain device might be permitted to temporarily override the policy on a per-call basis. For example, if the user is currently engaged in a first call in the circuit switched domain and if the first policy option is in effect, a second call initiated by the user would be placed in the circuit switched domain. In an embodiment, the user might be given the opportunity to manually specify that the second call should instead be placed in the packet switched domain.

In an embodiment, one or more additional policies might be implemented to specify the behavior that should occur when a second call is not connected. For example, an additional policy might state that if, for some reason, the second call cannot be completed, the policy currently in effect should be overridden and another policy should be implemented. For instance, if the user is currently engaged in a first call in the packet switched domain and if the second policy option is in effect, a second call initiated by the user would be attempted in the circuit switched domain. If the second call could not be completed, the second policy might be overridden and the second call might be attempted in the packet switched domain.

In an embodiment, one or more additional policies might be implemented to specify the behavior that should occur when a third call is attempted when two calls are already active on a multi-domain device. For example, if the user is currently engaged in a first call in the circuit switched domain and a second call in the packet switched domain, and if a third call is placed to the device, an additional policy might specify how the third call should be handled. The policy might state that the third call should be handled in the circuit switched domain or in the packet switched domain, that the call should be placed on hold, that the call should be sent to voice mail, that the user should be alerted about the call, or that the call should be handled in some other manner.

While the previous discussion has focused on the policy being provisioned on a multi-domain device, in other embodiments the policy could be provisioned on a component in a telecommunications network with which the device can communicate. That is, whenever a first call is active on a multi-domain device and a second call needs to be handled by the device, a network component might transmit instructions to the device regarding which of the three policy options should be followed in handling the second call.

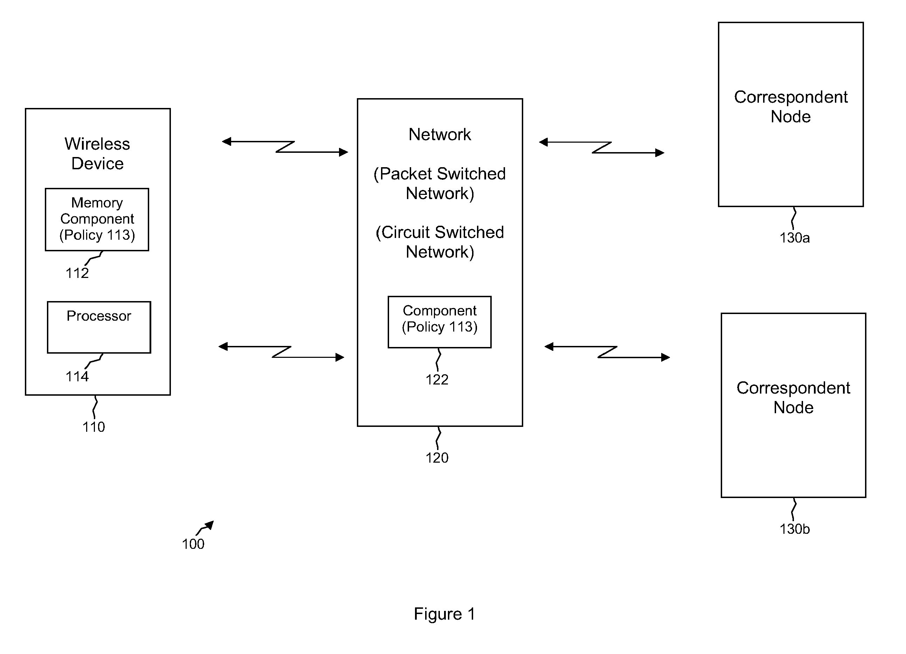

Figure 1 is a block diagram of an embodiment of a system 100 that includes a wireless device 110 that is capable of communicating with one or more correspondent nodes 130 in both the packet switched domain and the circuit switched domain. That is, the wireless device 110 is a multi-domain device. The wireless device 110 might be a wireless device as defined above or some other node with similar capabilities. The wireless device 110 communicates with the correspondent nodes 130 via a telecommunications network 120 that might include both a packet switched network and a circuit switched network. The packet switched network might be any type of network that is capable of handling multiple concurrent sessions. The circuit switched network might be a network that is capable of handling only one session at a time.

The wireless device 110 includes a memory component 112 that can maintain a policy 113. The memory component 112 might be an internal memory location integrated with the wireless device 110 or might be a removable memory device such as one of the memory cards commonly used with wireless devices. The wireless device 110 also includes a processor 114 that can implement the policy 113.

In an alternative embodiment, the policy 113 might be maintained and implemented in a component 122 in the telecommunications network 120. The component 122 might transmit instructions on handling calls according to the policy to the wireless device 110 as needed. The component 122 might be a voice call continuity (VCC) server, a circuit switched adaptation function (CSAF) domain transfer function (DTF) that follows the 3rd Generation Partnership Project (3GPP) technical specification (TS) 23.206, an ICCF (IMS CS (circuit switched) control function) that follows the 3GPP technical realization 23.892, or some other server, device, or component of the network 120 that promotes the transfer of a call between the packet switched domain and the circuit switched domain. Any component that can perform such a function can be referred to as a call continuity component. The component 122 can include a memory component that can store the policy and a processor that can implement the policy.

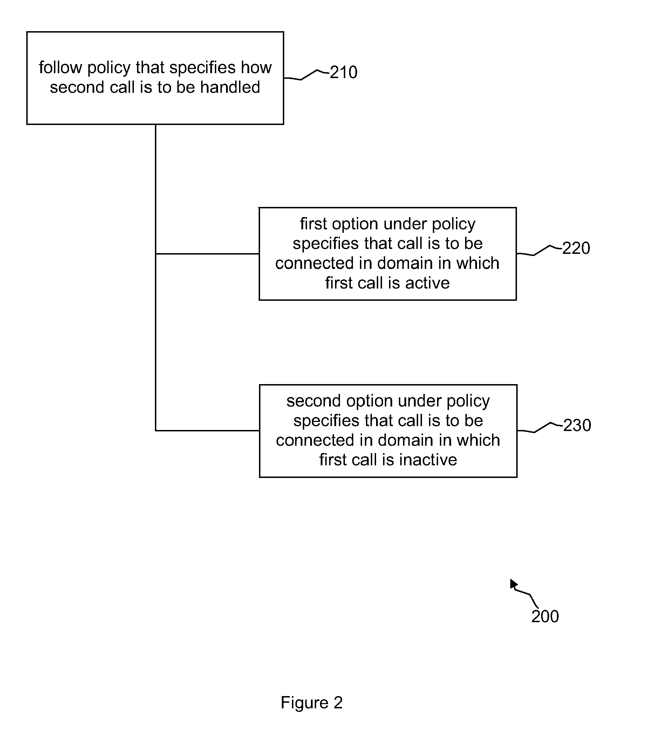

Figure 2 illustrates an embodiment of a method 200 for managing a second call on a multi-domain device when a first call is active on the multi-domain device. At block 210, a policy is followed that specifies how the second call is to be handled. At block 220, a first option under the policy specifies that the call is to be connected in the domain in which the first call is active. At block 230, a second option under the policy specifies that the call is to be connected in the domain in which the first call is not active.

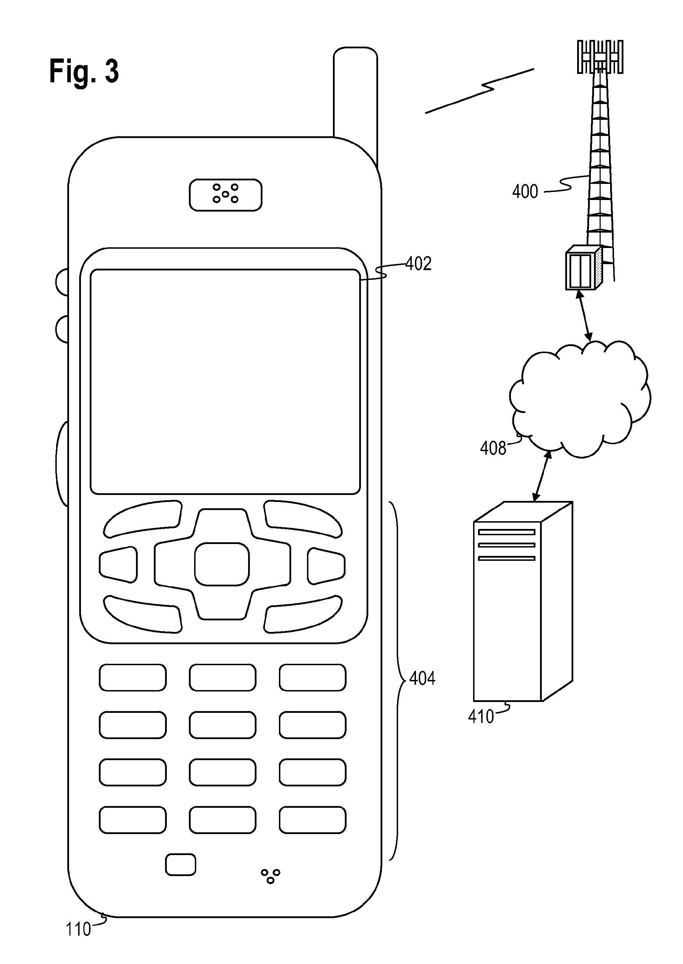

Figure 3 illustrates a wireless communications system including an embodiment of the wireless device 110. The wireless device 110 is operable for implementing aspects of the disclosure, but the disclosure should not be limited to these implementations. Though illustrated as a mobile phone, the wireless device 110 may take various forms including a wireless handset, a pager, a personal digital assistant (PDA), a portable computer, a tablet computer, or a laptop computer. Many suitable devices combine some or all of these functions. In some embodiments of the disclosure, the wireless device 110 is not a general purpose computing device like a portable, laptop or tablet computer, but rather is a special-purpose communications device such as a mobile phone, wireless handset, pager, or PDA. In another embodiment, the wireless device 110 may be a portable, laptop or other computing device. The wireless device 110 may support specialized activities such as gaming, inventory control, job control, and/or task management functions, and so on.

The wireless device 110 includes a display 402. The wireless device 110 also includes a touch-sensitive surface, a keyboard or other input keys generally referred as 404 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The wireless device 110 may present options for the user to select, controls for the user to actuate, and/or cursors or other indicators for the user to direct. The wireless device 110 may further accept data entry from the user, including numbers to dial or various parameter values for configuring the operation of the wireless device 110. The wireless device 110 may further execute one or more software or firmware applications in response to user commands. These applications may configure the wireless device 110 to perform various customized functions in response to user interaction. Additionally, the wireless device 110 may be programmed and/or configured over-the-air, for example from a wireless base station, a wireless access point, or a peer wireless device 110.

Among the various applications executable by the wireless device 110 are a web browser, which enables the display 402 to show a web page. The web page may be obtained via wireless communications with a wireless network access node, a cell tower, a peer wireless device 110, or any other wireless communication network or system 400. The network 400 may be similar to the network 120 of Figure 1. The network 400 is coupled to a wired network 408, such as the Internet. Via the wireless link and the wired network, the wireless device 110 has access to information on various servers, such as a server 410. The server 410 may provide call continuity functions, the policies, and/or content that may be shown on the display 402. Alternately, the wireless device 110 may access the network 400 through a peer wireless device 110 acting as an intermediary, in a relay type or hop type of connection.

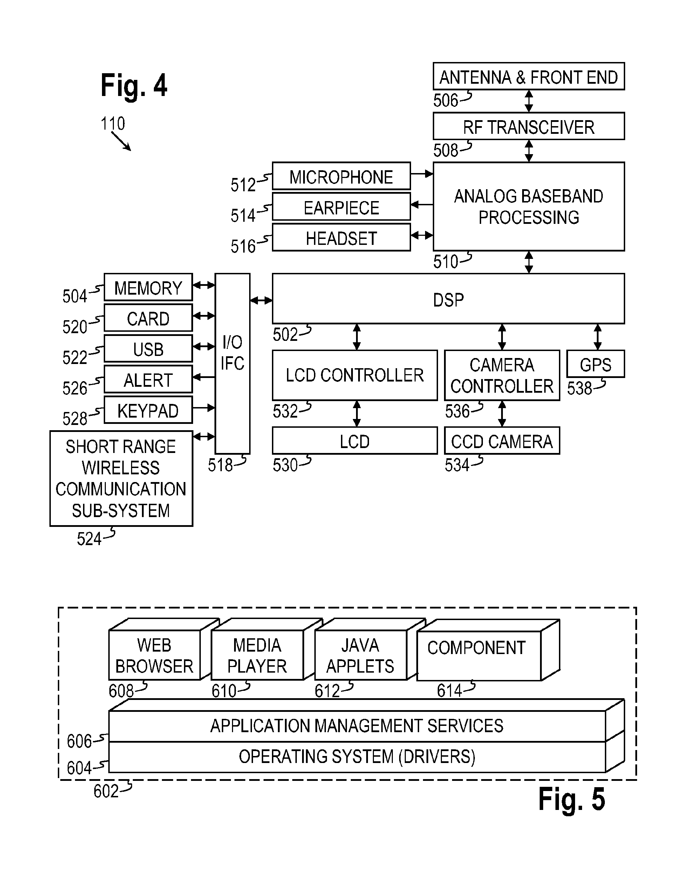

Figure 4 shows a block diagram of the wireless device 110. While a variety of known components of wireless devices 110 are depicted, in an embodiment a subset of the listed components and/or additional components not listed may be included in the wireless device 110. The wireless device 110 includes a digital signal processor (DSP) 502 and a memory 504. As shown, the wireless device 110 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, a short range wireless communication sub-system 524, an alert 526, a keypad 528, a liquid crystal display (LCD), which may include a touch sensitive surface 530, an LCD controller 532, a charge-coupled device (CCD) camera 534, a camera controller 536, and a global positioning system (GPS) sensor 538. In an embodiment, the wireless device 110 may include another kind of display that does not provide a touch sensitive screen. In an embodiment, the DSP 502 may communicate directly with the memory 504 without passing through the input/output interface 518.

The DSP 502 or some other form of controller or central processing unit operates to control the various components of the wireless device 110 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the wireless device 110 to send and receive information from a cellular network or some other available wireless communications network or from a peer wireless device 110. In an embodiment, the antenna and front end unit 506 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 506 may include antenna tuning and/or impedance matching components, RF power amplifiers, and/or low noise amplifiers.

The RF transceiver 508 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 510 and/or the DSP 502 or other central processing unit. In some embodiments, the RF Transceiver 508, portions of the Antenna and Front End 506, and the analog baseband processing unit 510 may be combined in one or more processing units and/or application specific integrated circuits (ASICs).

The analog baseband processing unit 510 may provide various analog processing of inputs and outputs, for example analog processing of inputs from the microphone 512 and the headset 516 and outputs to the earpiece 514 and the headset 516. To that end, the analog baseband processing unit 510 may have ports for connecting to the built-in microphone 512 and the earpiece speaker 514 that enable the wireless device 110 to be used as a cell phone. The analog baseband processing unit 510 may further include a port for connecting to a headset or other hands-free microphone and speaker configuration. The analog baseband processing unit 510 may provide digital-to-analog conversion in one signal direction and analog-to-digital conversion in the opposing signal direction. In some embodiments, at least some of the functionality of the analog baseband processing unit 510 may be provided by digital processing components, for example by the DSP 502 or by other central processing units.

The DSP 502 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 502 may perform modulation, coding, interleaving, and spreading, and for a receiver function the DSP 502 may perform despreading, deinterleaving, decoding, and demodulation. In another embodiment, for example in an orthogonal frequency division multiplex access (OFDMA) technology application, for the transmitter function the DSP 502 may perform modulation, coding, interleaving, inverse fast Fourier transforming, and cyclic prefix appending, and for a receiver function the DSP 502 may perform cyclic prefix removal, fast Fourier transforming, deinterleaving, decoding, and demodulation. In other wireless technology applications, yet other signal processing functions and combinations of signal processing functions may be performed by the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the short range wireless communication sub-system 524. The USB interface 522 may be used to charge the wireless device 110 and may also enable the wireless device 110 to function as a peripheral device to exchange information with a personal computer or other computer system. The short range wireless communication sub-system 524 may include an infrared port, a Bluetooth interface, an IEEE 802.11 compliant wireless interface, or any other short range wireless communication sub-system, which may enable the wireless device 110 to communicate wirelessly with other nearby mobile devices and/or wireless base stations.

The input/output interface 518 may further connect the DSP 502 to the alert 526 that, when triggered, causes the wireless device 110 to provide a notice to the user, for example, by ringing, playing a melody, or vibrating. The alert 526 may serve as a mechanism for alerting the user to any of various events such as an incoming call, a new text message, and an appointment reminder by silently vibrating, or by playing a specific pre-assigned melody for a particular caller.

The keypad 528 couples to the DSP 502 via the interface 518 to provide one mechanism for the user to make selections, enter information, and otherwise provide input to the wireless device 110. The keyboard 528 may be a full or reduced alphanumeric keyboard such as QWERTY, Dvorak, AZERTY and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Another input mechanism may be the LCD 530, which may include touch screen capability and also display text and/or graphics to the user. The LCD controller 532 couples the DSP 502 to the LCD 530.

The CCD camera 534, if equipped, enables the wireless device 110 to take digital pictures. The DSP 502 communicates with the CCD camera 534 via the camera controller 536. In another embodiment, a camera operating according to a technology other than Charge Coupled Device cameras may be employed. The GPS sensor 538 is coupled to the DSP 502 to decode global positioning system signals, thereby enabling the wireless device 110 to determine its position. Various other peripherals may also be included to provide additional functions, e.g., radio and television reception.

Figure 5 illustrates a software environment 602 that may be implemented by the DSP 502. The DSP 502 executes operating system drivers 604 that provide a platform from which the rest of the software operates. The operating system drivers 604 provide drivers for the wireless device hardware with standardized interfaces that are accessible to application software. The operating system drivers 604 include application management services ("AMS") 606 that transfer control between applications running on the wireless device 110. Also shown in Figure 5 are a web browser application 608, a media player application 610, and Java applets 612. The web browser application 608 configures the wireless device 110 to operate as a web browser, allowing a user to enter information into forms and select links to retrieve and view web pages. The media player application 610 configures the wireless device 110 to retrieve and play audio or audiovisual media. The Java applets 612 configure the wireless device 110 to provide games, utilities, and other functionality. A component 614 might provide functionality related to policies for handling multiple concurrent calls.

While several embodiments have been provided in the present disclosure, it should be understood that the disclosed systems and methods may be embodied in many other specific forms without departing from the scope of the present disclosure as set out in the claims. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein as set out in the claims.

## Claims

1. A method for managing a second call on a multi-domain communications device when a first call is active on the multi-domain communications device, comprising:
following a policy that specifies that the second call is to be connected in:
a first domain in which the first call is active; or
a second domain in which the first call is not active.

2. The method of claim 1, wherein the second call is:
a call initiated by the multi-domain communications device; or
a call placed to the multi-domain communications device.

3. The method of claim 1 or claim 2, wherein the policy is set by an operator of a telecommunications network to which the multi-domain communications device subscribes.

4. The method of claim 1 or claim 2, wherein the policy is set by a user of the multi-domain communications device.

5. The method of claim 4, wherein the multi-domain communications device informs a telecommunications network component of the policy set by the user and the telecommunications network component conforms to the policy.

6. The method of any one of the preceding claims, wherein the policy is provisioned on the multi-domain communications device via a transport protocol, the protocol comprising any of:
Short Message Service;
Unstructured Supplementary Service Data;
Multimedia Broadcast/Multicast Service;
cell broadcast;
Internet Protocol over General Packet Radio Service;
wireless local area network; or
Worldwide Interoperability for Microwave Access.

7. The method of claim 6, wherein a provisioning mechanism used in the transport protocol comprises:
Open Mobile Alliance Device Management; and/or
over the air Universal Mobile Telephone Service Subscriber Identity Module.

8. The method of any one of the preceding claims, wherein the policy is stored in:
a memory component integrated with the multi-domain communications device; and/or
a memory component removable from the multi-domain communications device.

9. The method of any one of the preceding claims, wherein the first domain is a packet switched domain or a circuit switched domain and the second domain is another of the packet switched domain or the circuit switched domain.

10. The method of any one of the preceding claims, wherein the policy further specifies that the second call can be connected in the first or second domain based on at least one factor not related to an activity status of the first or second domain.

11. The method of claim 10, wherein the factor is any of:
a network traffic level;
a cost consideration; and/or
a result of a random domain selection procedure.

12. The method of any one of the preceding claims, wherein a first instance of the policy is applied to the second call when the second call is originated by the multi-domain communications device and a second instance of the policy is applied to the second call when the second call is terminated at the multi-domain communications device.

13. A multi-domain communications device, comprising:
a memory component provisioned to store a policy for managing a second call on the multi-domain communications device when a first call is active on the multi-domain communications device; and
a processor configured to implement the policy.

14. The multi-domain communications device of claim 13, wherein the policy is arranged to specify that the second call is to be connected in:
a first domain in which the first call is active; or
a second domain in which the first call is not active.

15. The multi-domain communications device of claim 14, wherein the first domain comprises a packet switched domain or a circuit switched domain and the second domain comprises another of the packet switched domain or the circuit switched domain.

16. The multi-domain communications device of claim 14 or claim 15, wherein the policy is further arranged to specify that the second call can be connected in the first or second domain based on any of:
a network traffic level;
a cost consideration; and/or
a result of a random domain selection procedure.

17. A telecommunications network component, comprising:
a memory component provisioned to store a policy for managing a second call on a multi-domain communications device when a first call is active on the multi-domain communications device; and
a processor configured to implement the policy.

18. The telecommunications network component of claim 17, wherein the policy is arranged to specify that the second call is to be connected in:
a first domain in which the first call is active; or
a second domain in which the first call is not active; and
wherein the second call is:
a call initiated by the multi-domain communications device, or
a call placed to the multi-domain communications device.

19. The telecommunications network component of claim 17 or claim 18, wherein the telecommunications network component is:
the multi-domain communications device; or
a call continuity component.

20. The telecommunications network component of claim 18 or claim 19 when dependent on claim 18, wherein the first domain is a packet switched domain or a circuit switched domain and the second domain is another of the packet switched domain or the circuit switched domain.

21. A computer readable medium storing computer readable instructions executable by a processor of a computing device to cause said device to implement the steps of the method of any one of claims 1 to 12.

## Amended claims

### Amended claims in accordance with Rule 137(2) EPC.

**1.** A method for managing a second call on a multi-domain communications device (110) when a first call is active in a first domain on the multi-domain communications device (110), comprising:
connecting the second call in a second domain in which the first call is not active as specified by a policy (113).

**2.** The method of claim 1, wherein the second call is:
a call initiated by the multi-domain communications device (110); or
a call terminated at the multi-domain communications device (110).

**3.** The method of claim 1 or claim 2, wherein the policy (113) is set by an operator of a telecommunications network (120) to which the multi-domain communications device (110) subscribes.

**4.** The method of claim 1 or claim 2, wherein the policy (113) is set by a user of the multi-domain communications device (110).

**5.** The method of claim 4, wherein the multi-domain communications device (110) informs a telecommunications network component (122) of the policy (113) set by the user and the telecommunications network component (122) conforms to the policy.

**6.** The method of any one of the preceding claims, wherein the policy (113) is provisioned on the multi-domain communications device (110) via a transport protocol, the protocol comprising any of:
Short Message Service;
Unstructured Supplementary Service Data;
Multimedia Broadcast/Multicast Service;
cell broadcast;
Internet Protocol over General Packet Radio Service;
wireless local area network; or
Worldwide Interoperability for Microwave Access.

**7.** The method of claim 6, wherein a provisioning mechanism used in the transport protocol comprises:
Open Mobile Alliance Device Management; and/or
over the air Universal Mobile Telephone Service Subscriber Identity Module.

**8.** The method of any one of the preceding claims, wherein the policy (113) is stored in:
a memory component (112) integrated with the multi-domain communications device (110); and/or
a memory component (112) removable from the multi-domain communications device (110).

**9.** The method of any one of the preceding claims, wherein the first domain is a packet switched domain or a circuit switched domain and the second domain is another of the packet switched domain or the circuit switched domain.

**10.** A device, comprising:
a memory component (112; 122) provisioned to store a policy (113) for managing a second call on a multi-domain communications device (110) when a first call is active in a first domain on the multi-domain communications device (110), the policy (113) specifying that the second call is to be connected in a second domain in which the first call is not active; and
a processor (114) configured to implement the policy (113).

**11.** The device of claim 10, wherein the device is the multi-domain communications device (110).

**12.** The multi-domain communications device (110) of claim 11, wherein the first domain comprises a packet switched domain or a circuit switched domain and the second domain comprises another of the packet switched domain or the circuit switched domain.

**13.** The multi-domain communications device (110) of claim 11 or claim 12, wherein the policy (113) is further arranged to specify that the second call can be connected in the first or second domain based on any of:
a network traffic level;
a cost consideration; and/or
a result of a random domain selection procedure.

**14.** The device of claim 10 wherein the device is a telecommunications network component (122).

**15.** The telecommunications network component (122) of claim 14, wherein the second call is:
a call initiated by the multi-domain communications device (110), or
a call terminated at the multi-domain communications device (110).

**16.** The telecommunications network component (122) of claim 14 or claim 15, wherein the telecommunications network component (122) is
a call continuity component.

**17.** The telecommunications network component (122) of claim 15 or claim 16 when dependent on claim 15, wherein the first domain is a packet switched domain or a circuit switched domain and the second domain is another of the packet switched domain or the circuit switched domain.

**18.** A computer readable medium storing computer readable instructions executable by a processor (114) of a computing device to cause said device to implement the steps of the method of any one of claims 1 to 9.
